Europäisches Patentamt

European Patent Office

Office européen des brevets

(11) Publication number: **0 028 448**
A2

# EUROPEAN PATENT APPLICATION

(21) Application number: **80303021.2**

(22) Date of filing: **29.08.80**

(51) Int. Cl.³: **B 62 D 11/18**
**F 16 H 39/48**

(30) Priority: **01.11.79 PC T/US79/00928**

(43) Date of publication of application:
**13.05.81 Bulletin 81/19**

(84) Designated Contracting States:
**BE CH DE FR GB IT LI SE**

(71) Applicant: **CATERPILLAR TRACTOR CO.**
**100 Northeast Adams Street**
**Peoria Illinois 61629(US)**

(72) Inventor: **Bianchetta, Donald L.**
**380, North DeWitt Place**
**Coal City Illinois 60416(US)**

(74) Representative: **Brunner, Michael John et al,**
**Gill Jennings & Every 53 to 64, Chancery Lane**
**London WC2A 1HN(GB)**

(54) Fluid motor control system.

(57) A fluid motor control system (11) is designed to ensure that automatic changes of motor displacement, which are initiated by occurrence of a predetermined operational condition in the system (11), result in a change of motor speed of the desired magnitude. Flow adjustment elements (76) respond to a displacement increase by reducing the flow of working fluid available to the motor or motors (12, 13) and respond to a motor displacement reduction by increasing the available flow. In one specific form, the system (11) controls a pair of right and left side vehicle drive motors (12, 13) and provides for automatic reduction of the fluid flow supplied to the motors (12, 13) on increase of the motor displacements to reduce travel speed during turning.

./...

- 1 -

CATERPILLAR TRACTOR CO.,                    GJE 5180/083

## FLUID MOTOR CONTROL SYSTEM

This invention relates to control systems for fluid driven motors in which the displacement may be changed to vary the motor speed or torque. More particularly the invention relates to control systems for motors in which an automatic change in the displacement is required under a specific operating condition such as, for example, in the case of a vehicle, when it is undergoing a turn.

Control of the speed of a fluid motor may be accomplished by varying the rate of flow of working fluid through the motor or by varying the displacement of the motor. Some fluid pressure driven systems use both speed control techniques. In some hydrostatic drive vehicles, for example, the fluid displacement of the motor is variable in steps to provide a plurality of speed ranges while flow regulation enables variation of speed within each of the ranges.

The extent of speed change that can be realized by adjusting the displacement of fluid motors is often undesirably limited and subject to inaccuracy, resulting in part from practical limitations on the size and complexity of the fluid motor that restrict the range of displacement change that can be designed into the motor, but aggravated by certain characteristics of the pressurized fluid sources used to supply working fluid to the motor and which tend to counteract the effect of a given displacement change in the motor.

The pressurized fluid sources which are commonly used to supply working fluid to fluid motors are often arranged to maintain a constant output pressure by varying output flow in accordance with changes of demand for fluid by the motor. One such common form of pressurized fluid source is a variable displacement pump which is controlled by a pressure compensator that automatically adjusts the pump displacement as necessary to maintain a constant output pressure despite variable demand. If motor displacement is increased to reduce motor speed and if the pressure compensated pump is not at that time delivering the maximum possible flow, then the pressure compensator senses an incipient output pressure drop and reacts by increasing pump displacement and therefore the output flow from the pump. The increased flow of working fluid which is then provided to the motor at least partially offsets the speed reducing effect of the motor displacement increase. An opposite but otherwise similar effect occurs if motor displacement is reduced with the intention of increasing motor speed.

This reduction of the speed changing effect of motor displacement adjustments is not confined to systems using pressure compensated pumps.

This effect undesirably limits the range of motor speed change which can be realized by motor displacement adjustment. Furthermore, such effects introduce inaccuracy and unpredictability into control of motor speed by displacement change since the magnitude of the effect is dependent on variable external factors such as the level of pump output flow in relation to maximum possible flow at the time that a motor displacement change is made.

- 3 -

Many motor control systems, including systems which rely on changes of motor displacement to accomplish speed changes, also include an operator's speed control for selectively varying the rate of flow of working fluid through the motor to control motor speed. The operator may therefore counteract the effects discussed above during a change of motor displacement by adjusting the flow controlling speed control to assure that the displacement change results in the desired degree of motor speed change. It would be preferable in many systems of this kind if the effect could be counteracted without relying on operator action and without necessarily requiring that the setting of the operator's primary speed control be disturbed at the time that a change of motor displacement occurs.

In some systems it also is preferable that changes of motor displacement, occur automatically in response to the sensing of some specific operating condition in the system.

Hydrostatic drive vehicles of the kind employed in earthworking operations are typically subject to the operational requirements and problems discussed above. Hydraulic excavators, for example, are often propelled by a pair of variable displacement fluid motors each driving a separate crawler track on opposite sides of the vehicle. The operator's primary speed control enables selection of the rate and direction of fluid flow through both motors to control vehicles speed and direction. Steering controls enable selective reduction of the speed of one motor relative to the other to initiate a pivot turn and also enable reversing of one motor relative to the other to effect a spot turn. To establish a plurality of speed ranges, means are provided for shifting the displacement of each of the motors in steps. While a manually operated control may be provided for actuating the motor displacement adjusting means to shift speed ranges, it is also desirable that such means be actuated automatically, without reliance on the operator, under certain circumstances. Specifically, it may be desirable that vehicle speed be automatically reduced during a turn, both to assure stability and to avoid the overpressures and excessive torques which can otherwise occur in parts of a hydrostatic drive system during a turn. Automatic speed changes by motor displacement change have heretobefore tended to be undesirably limited in magnitude and variable in an unpredictable manner due in part to the counteractive effects of pressurized fluid sources as discussed above.

According to the invention a control system for at least one fluid motor, which is driven by pressurized working fluid and which has displacement adjustment means for changing the fluid displacement of the motor, the control system having displacement control means for automatically actuating the displacement adjustment means upon occurrence of a predetermined condition, is characterised in that a flow adjusting means is provided for reducing the flow of working fluid which is available to the motor when the displacement thereof is increased and for increasing the flow of working fluid available to the motor when the displacement thereof is decreased.

By automatically changing the flow of working fluid to a fluid motor in conjunction with an automatic change of motor displacement, the invention assures that an automatic change of motor speed of the desired magnitude is brought about. This is accomplished without relying on direct operator action for this purpose and without necessarily requiring any disturbance of the primary motor speed controls. In instances where the motor propels a vehicle, the invention provides a
more reliable automatic speed reduction under a
predetermined operational condition such as during
periods when the vehicle is undergoing a turn.

One example of a control system according to the
invention will now be described with reference to the
accompanying drawing which is a diagram of the fluid
motor control circuit.

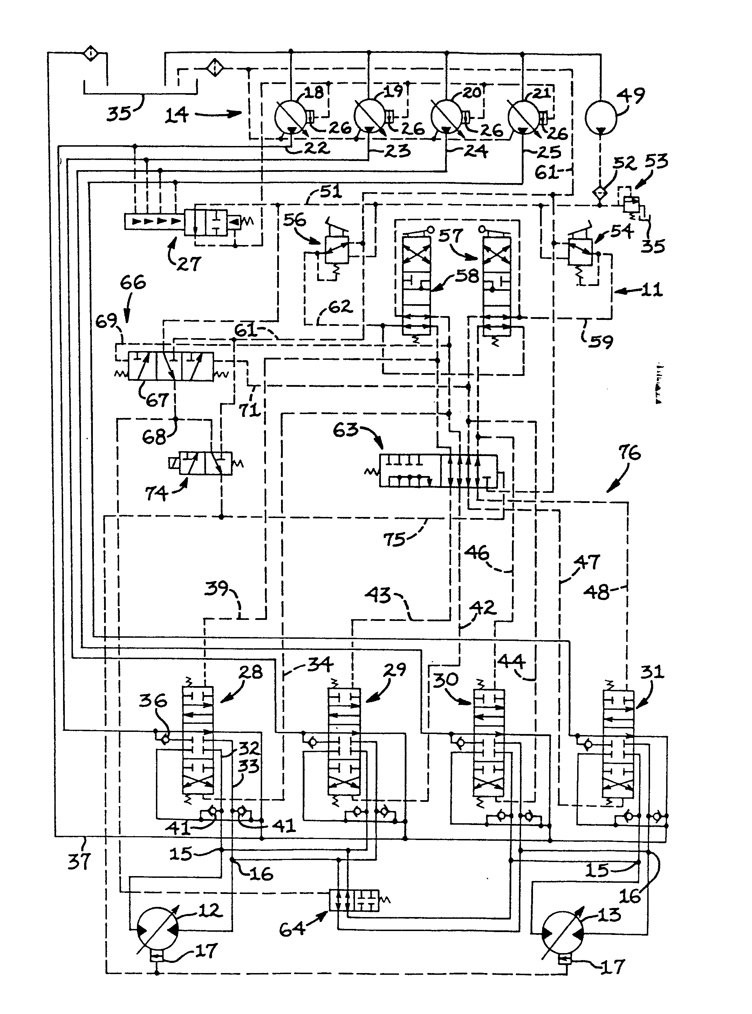

In the drawing, is shown a fluid motor control
system 11 for controlling a first variable displacement
fluid motor 12 and a second variable displacement
fluid motor 13, both of which are driven by pressurized
working fluid from a pressurized fluid source 14.

While the invention is adaptable to other usages,
the control system 11 of this embodiment was designed for
use in a hydraulic excavator vehicle of the kind
described in U.S. Patent Specification No. 4,078,681.
In that working context, the first motor 12 drives a
crawler track at the left side of the vehicle while the
second motor 13 drives a crawler track at the right
side of the vehicle and to facilitate an understanding
of this example of the invention, the first motor 12
will hereinafter be referred to as the left motor while
the second motor 13 will be referred to as the right
motor.

The control system 11 provides for selective
synchronous variation of the speed of the two track
motors 12 and 13 to control the vehicle's forward or
reverse speed, and also enables selective variation of
the speed of one of the motors relative to that of the
other to enable the vehicle to turn. To provide for
spot turns as well as pivot turns, the control
system 11 also enables either motor 12 or 13 to be
reversed relative to the other.

The control system 11 provides for manual shifting of the motors 12 and 13 between a high speed range and a low speed range by changes of the displacement of both motors. In addition, the control system 11 automatically shifts the motors 12 and 13 to a high displacement, low speed range from the high speed range when there is a difference of speed between the two motors 12 and 13, required when the vehicle is to turn.

Each of the motors 12 and 13 is of the known kind having a pair of working fluid ports 15 and 16 and operates in the forward direction when fluid flows from the first port 15 and to the second port 16 and in the opposite, reverse direction, when the fluid flows from the second port 16 to the first port 15. The motor are also of the type in which a low displacement, high speed range and a relatively high displacement low speed range are selectable by application and withdrawal respectively of pilot fluid pressure to a displacement adjustment means 17.

In some fluid driven motor systems such as the hydraulic excavator vehicles discussed above, the drive motors 12 and 13 must be very large and have a high output power rating. Single pumps with a sufficiently high output capacity to supply both motors and, also any other fluid actuated devices on the vehicle, may not be readily obtainable and in any case are of inconveniently large size and subject to other practical problems. In part to avoid these problems the pressurized fluid source 14 comprises a plurality of relatively small pumps 18, 19, 20 and 21. The pumps which are driven by the engine of the hydraulic excavator vehicle and withdraw working fluid such as oil from a tank 35 and deliver it under pressure respective pump output lines 22, 23, 24 and 25.

In order to vary the output flow from pumps

- 7 -

18 to 21 in response to variation in demand from the motors 12 and 13, each pump is of the variable displacement type, equipped with a pressure compensator 26. Pressure compensators 26 are of known type which reduce the displacement of the associated pump when an output pressure feedback signal exceeds a predetermined level and increase pump displacement when the feedback signal falls below that level. The feedback signal pressure is applied to all the compensators 26 through a summing valve 27 which receives pilot fluid at a constant predetermined pressure from a pilot fluid pump 49 through a filter 52 and supply line 51. The predetermined pilot fluid pressure, typically substantially lower than the miximum output pressures of the motor supply pumps 18 to 21, is maintained by a relief valve 53 connected between line 51 and tank 35.

The summing valve 27 is a modulating valve, spring biased towards a closed position at which pilot pressure is cut off from the pressure compensators 26, the spring force being supplemented by a feedback fluid force proportional to the pressure which is being applied to the pressure compensators 26 through the summing valve. These forces are opposed by a counterforce proportional to the combined output pressures of the pumps 18 to 21 to urge the summing valve towards an open position. Thus the displacements of the pumps 18 to 21 are automatically adjusted as necessary to limit the combined output pressures of the pumps to a predetermined value.

Although a cross over or sharing or working fluid is provided for under certain conditions to be described, first and second pumps 18 and 19 primarily supply working fluid to the left motor 12 while the third and fourth pumps 20 and 21 primarily supply fluid to the right motor 13. To start and stop the left motor 12 and to control its direction and speed a first directional control valve 28 is connected between the pump output line 22 and the ports 15 and 16 of motor 12 and a second directional control valve 29 is connected between the output line 23 of the second pump 19 and the same ports 15 and 16 of the same motor 12. A third directional control valve 30 is connected between ports 15 and 16 of the right motor 13 and the output line 24 of the third pump and a fourth directional control valve 31 is connected between the same ports of the motor 13 and the fourth pump output line 25.

All four directional control valves 28 to 31 are three position pilot pressure operated valves spring biased to a centre position at which the pump output line is opened to tank 35 through a drain line 37 and in which lines 32 and 33 from the valve to the ports 15 and 16 are closed.

Pressurization of a forward drive pilot line 34 shifts the directional control valve 28 to a forward drive position at which the first port 15 of the left motor 12 is connected with the pump output line 22 through a load check valve 36 while the second port 16 of the same motor is connected with drain line 37, the extent of connection in both respects being a function of the level of pilot pressure applied in the pilot line 34, up to the point where the directional control valve 28 is fully shifted to the forward drive position.

Similarly, pressurization of a reverse drive pilot pressure line 39 shifts directional control valve 28 into a third or reverse drive position to a degree dependent on the magnitude of the pressure in the pilot line 39. In the reverse drive position, the valve 28 connects the second port 16 of the left motor 12 with its first pump output line 22 through the load check valve 36 while connecting the first port 15 with the drain line 37.

Separate anticavitation check valves 41 are connected between the drain line 37 and lines 32 and 33 to prevent negative pressures from developing in the first motor circuit. The anticavitation valves 41 enable a return of fluid from the drain line 37 to either port 15 or 16 if an abnormal lowering of pressure occurs due to an overrunning condition of the motor such as can be caused in motion of the vehicle down a slope.

The second directional valve 29 is connected between the second pump output line 23 and the ports 15 and 16 of the left motor and is responsive to pilot pressures from a separate forward drive pilot line 42 and reverse drive pilot line 43. The third directional control valve 30 is connected in a similar manner between the third pump output line 24, drain line 37 and the ports 15 and 16 of the right motor 13 and is responsive to pilot pressures from a third forward drive pilot line 44 and reverse drive pilot line 46. The fourth directional control valve 31 is also connected in a similar manner between the fourth pump output line 25, drain line 37 and ports 15 and 16 of the right motor 13, but is operated by pilot pressures from a fourth forward drive pilot line 47 and drive pilot line 48.

Thus, the left motor 12 may be started up and caused to operate at a selected speed in the forward or reverse directions by selective pressurization of forward drive pilot lines 34 and/or 42 or reverse pilot lines 39 and/or 43 respectively. The right motor 13 may be operated in the forward or reverse drive directions by pressurizing pilot lines 44 and/or 47 or reverse pilot lines 46 and/or 48 respectively.

Circuit components which are actuated by the operator to control the directional control valves 28 to 31 and thereby control the motors 12 and 13 include a forward drive valve 54, a reverse drive valve 56, a right turn steering valve 57 and a left turn steering valve 58. Forward and reverse drive valves 54 and 56 in this particular example are pedal operated while steering valves 57 and 58 are hand lever operated.

Forward drive valve 54 is connected between the pilot pressure supply pump 49 and both the right and left steering valves 57 and 58 through a branched forward drive line 59 and has an unactuated position at which the forward drive line 59 is vented to the tank 35 through a drain line 61, and may be actuated to pressurize forward drive line 59 to any selectable pressure up to the maximum provided by the pump 49. The reverse drive valve 56 is of the same type and is connected between pilot pressure supply pump 49 and both the right and left steering valves 57 and 58 through a reverse drive line 59. The reverse drive valve 56 has an unactuated position at which line 62 is opened to tank the 35 through the drain line 61 and may be actuated to pressurize the reverse drive line 62 in the same way as the forward drive line is pressurized.

The right and left steering valves 57 and 58 are three position valves and each is spring biased towards a first or unactuated position. In its first position, the left steering valve 58 connects forward and reverse drive lines 59 and 62 with the forward and reverse pilot lines 34 and 39 respectively of the first directional valve 28. Also in its first position the steering valve 58 connects the forward and reverse drive lines 59 and 62 with the forward and reverse pilot lines 42 and 43 respectively of the second directional control valve 29 through a pump selector valve 63, to be hereinafter discussed in more detail, provided that the selector valve is in a piloted condition (as shown in the Figure).

The right steering valve 57, in its first position connects forward and reverse drive lines 59 and 62 with forward and reverse pilot lines 44 and 46 respectively of the third directional control valve 30 and with forward and reverse pilot lines 47 and 48 respectively of the fourth directional control valve 31, through the pump selector valve 63.

Thus if the left and right steering valves 57 and 58 are unactuated and forward and reverse drive valves 54 and 56 are also unactuated, thereby opening forward and reverse drive lines 59 and 62 to drain, pilot pressures are vented from both ends of each of the directional control valves 28 to 31 and both motors are stopped.

Provided both steering valves 57 and 58 remain unactuated, actuation of forward drive valve 54 pilots the directional control valves 28 to 31 to initiate synchronous operation of the right and left motors 12 and 13 in the forward drive direction.

Under the above described conditions, the output of all four pumps 18 to 21 is available to drive the motors 12 and 13. While the first and second pumps 18 and 19 primarily supply the left motor 12 and the third and fourth pumps 20 and 21 primarily supply the right motor 13, a crossover or interchange of fluid between the two motor circuits is provided for under the above described operating conditions to assure synchronization of the motors. In particular, a two position pilot operated cross-over valve 64 is connected between the ports 15 and 16 of left motor 12 and the corresponding ports 15 and 16 of right motor 13. Cross-over valve 64 has a piloted position at which the ports 15 and 16 of both motors 12 and 13 are interconnected. At the unpiloted position of the crossover valve 64, there is no interconnection between the corresponding ports of the two motors 12 and 13 and asynchronous operation of the motors is possible.

Provided that the steering valves 57 and 58 still remain unoperated, actuation of the operator's reverse drive valve 56 pressurizes reverse drive line 62 which pressurization is transmitted to the reverse drive pilot lines of the directional control valves through the left and right steering valves 58 and 57. Thus the effects of actuation of the reverse drive valve 56 are essentially similar to those of actuation of the forward drive valve 54 except insofar as the directional control valves 28 to 31 are piloted in an opposite direction to cause reversed operation of the motors 12 and 13.

Operation of steering valves 57 or 58 enables either of the motors 12 and 13 to be selectively slowed or reversed relative to the other. Slowing of one motor relative to the other produces a pivot turn about a turning radius depending on the degree of the relative slowing while reversal of one motor relative to the other produces a spot turn.

To slow left motor 12 relative to right motor 13, left steering valve 58 is shifted towards a second position during which shifting the connection of the forward and reverse pilot lines of the first directional control valve 28 with the forward and reverse drive lines 59 and 62 respectively are progressively decreased and the two pilot lines 34 and 39 are increasingly intercommunicated with each other. This progressively reduces the pilot pressure differential at opposite ends of the first directional control valve 28 to reduce the flow of working fluid to the left drive motor 12. The actuation of the left steering valve 58 also shifts both pump selector valve 63 and crossover valve 64 as will hereinafter be described in more detail.

Further operation of the left side steering valve 58 into a third position reverses the original communication of forward and reverse drive lines 59 and 62 with the forward and reverse pilot lines of the first directional valve 28. This reverses the pilot pressures at the first directional control valve 28 causing a reversal of the direction of operation of the left motor 12 only.

Right steering valve 57 is essentially similar to the left steering valve 58 and enables similar relative slowing or reversal of the right motor 13.

The adjustment means 17 of the two motors 12 and 13 are controlled by displacement control means 66 and this provides for both manual selection of the speed range and also for an automatic shift of the motor displacements when a steering valve 57 or 58 is actuated.

The displacement control means 66 includes a three position condition sensing valve 67 which is spring biased towards an centered position at which pilot pressure from supply line 51 is transmitted to a flow junction 68. A pilot connection 69 at one end of its condition sensing valve 67 is in communication with forward drive pilot line 34 of the first directional control valve 28 while another pilot connection 71 at the opposite end of the valve 67 connects with the forward drive pilot line 44 of the third directional control valve 30. As the forward drive pilot lines 34 and 44 of the first and third directional control valves 28 and 30 respectively are similarly pressurized at times when the speeds of the two motors 12 and 13 are the same, the condition sensing valve 67 remains at its centered position at such times.

During asynchronous operation of the two motors 12 and 13, the pressures in forward drive pilot lines 34 and 44 of the first and third directional control valves 28 and 30 respectively are disimilar. This pressure differential pilots condition sensing valve 67 away from the centered position to one of the two additional positions at each of which the valve 67 vents pilot pressure from flow junction 68 into the pilot fluid drain line 61.

A manually controlled two position speed range selector valve 74 is spring biased to a first position at which the flow junction 68 is connected with the displacement adjustment means 17 of both motors 12 and 13 and also with a pilot line 75 of the pump selector valve 63. Thus if neither steering valve 57 or 58 is actuated and therefore condition sensing valve 67 is at its centered position, and provided that manual speed range selector valve 74 is at its first position, pilot pressure is transmitted from the supply line 51 to the pump selector valve 63 and to the displacement adjustment means 17 of both motors 12 and 13. Under those conditions, selector valve 63 is actuated and the pilot lines 42 and 43 of second directional control valve 29 are communicated with the corresponding pilot lines 34 and 39 of the first directional control valve while the pilot lines 47 and 48 of the fourth directional control valve 31 are communicated with the corresponding pilot lines 44 and 46 of the third directional control valve 30.

Accordingly the output of all of the four supply pumps 22 to 25 is available to drive the motors 12 and 13. Also under those conditions, the pressurization of the displacement adjustment means 17 of the two motors 12 and 13 holds the motors in the low displacement, high speed range condition. Pilot pressure from flow junction 68 is also transmitted to the crossover valve 64 so that under the above described conditions fluid may be exchanged between the two motor circuits to assure synchronous speeds.

If during operation in the forward drive mode the left steering valve 58 is actuated toward the second position to initiate a pivot turn of the vehicle, the communication of pilot pressure to the forward pilot lines 34 and 42 of the first and second directional control valves 28 and 29 respectively is restricted to a selected extent. As the pilot pressures which are being supplied to the other two directional control valves 30 and 31 through the right steering valve 57 are unaffected, a pilot pressure imbalance occurs across the condition sensing valve 67 which then shifts to depressurize flow junction 68. Depressurization of flow junction 68 shifts the crossover valve 64 to isolate the corresponding ports 15 and 16 of the two motors 12 and 13 from each other and enable asynchronous operation of the motors.

Through the shift control valve 74, the depressurization of flow junction 68 also relieves pressure from the displacement adjustment means 17 of both motors 12 and 13 causing both motors to shift to the high displacement, low speed range mode of operation. Concurrently, the depressurization of the flow junction 68 releases pilot pressure from the pump selector valve 63 which then shifts to vent all pilot lines 42, 43, 47

- 16 -

and 48 of the second and fourth directional control valves 29 and 31. The unpiloted second and fourth directional control valves 29 and 31 then spring return to their centered positions to block the flow of working fluid from second pump 23 to left motor 12 and from the fourth pump 21 to the right motor 13.

Thus, concurrently, with the automatic change of displacement of the two motors 12 and 13, the flow of working fluid available to each such motor is also reduced automatically. As the flow of working fluid which is available to each motor 12 and 13 is substantially reduced concurrently with the increases of motor displacement, a very sizable and assured automatic reduction of motor speeds occurs. Pump selector valve 63 in conjunction with the second and fourth directional control valves 29 and 31 thus function as a flow adjusting means 76 to reduce the flow of working fluid which is available to the motors 12 and 13 when the motor displacements are increased.

It may be observed that the motors 12 and 13 remain in the low speed range if the left steering valve 58 is actuated further toward the third position at which the direction of drive of left side motor 12 is reversed relative to that of the right side motor 13 to accomplish a spot turn of the vehicle. The unbalanced pilot pressures remain on the valve 67 which still depressurizes flow junction 68.

When at the completion of the turn of the vehicle, the operator deactuates the right steering valve 58, the steering valve returns to the original position and in the process balances the pilot pressures at opposite ends of condition sensing valve 67. Condition sensing valve 67 then returns to the centered position at which it pressurizes flow junction 68. This in turn pressurizes displacement adjustment means 17 of both motors 12 and 13 to automatically restore the low displacement high speed range mode of operation in both motors. This also shifts crossover valve 64 to again enable an interchange of working fluid between the two motors to assure synchronous operation and shifts pump selector valve 63 to restore pilot pressures at the second and fourth directional control valves 29 and 31 to make the working fluid outputs of second and fourth pumps 19 and 21 available to motors 12 and 13. Thus concurrently with the decreases of the displacement of motors 12 and 13 the flow adjusting means increases the flow of working fluid available to both motors and assures a sizable automatic increase of motor speeds at that time.

An essentially similar automatic speed reduction of both motors 12 and 13 occurs if it is the right steering valve 57 rather than the left steering valve 58 that is actuated except insofar as the pilot pressure imbalance experienced by condition sensing valve 67 is an opposite direction. As a shift of the condition sensing valve 67 in either direction away from the centered position acts to unpressurize flow junction 68, the practical effects remain the same as those described above with respect to the effects of operation of the left steering valve 58.

Essentially the same automatic downshifting of the motors 12 and 13 to reduce vehicle speed occurs if one or the other of the steering valves 57 or 58 is actuated at a time when the operator has actuated the reverse drive valve 56 to travel the vehicle in a reverse direction. With the reverse drive valve 56 operated, it is reverse drive line 62 which is pressurized. Actuation of either steering valve 57 or 58 under this reverse drive condition again unbalances the pilot pressures at opposite ends of condition sensing valve 67 causing the valve 67 to again unpressurize flow junction 68 with the result previously described.

The change of motor speeds in response to turning of the vehicle is an automatic action which is not subject to the direct control of the operator except insofar as it is the operator who initiates the turn of the vehicle through the steering control valves 57 and 58.

The motor control circuit 11 also provides means for enabling the operator to directly and selectively shift the motors 12 and 13 to the low speed range during straight travel of the vehicle. This is accomplished by movement of the actuating valve 74 to its second position in which the pilot pressure at displacement adjustment means 17 of both motors 12 and 13 and the pilot line 75 of pump selector valve 63 is relieved through pilot-fluid drain line 61, with the results previously described. The speed range selector valve 74 is shown as a solenoid operated valve in the drawing as it is often preferable that it be located close to the motors 12 and 13 and therefor remote from the other operator's controls. In instances where the speed range selector valve 74 is located in proximity to the other operator actuated controls, it may be push button operated or have other suitable actuating means.

The invention may also be adapted to the control of other fluid motor driven systems, which need not necessarily be vehicles, in which it is desired to provide for an automatic change of speed of one or more fluid motors in response to a predetermined specific operating condition.

- 19 -
<u>CLAIMS.</u>

1.      A control system (11) for at least one fluid motor (12), which is driven by pressurized working fluid and which has displacement adjustment means (17) for changing the fluid displacement of the motor (12), the control system having displacement control means (66) for automatically actuating the displacement adjustment means (17) upon occurrence of a predetermined condition, characterised in that a flow adjusting means (76) is provided for reducing the flow of working fluid which is available to the motor (12) when the displacement thereof is increased and for increasing the flow of working fluid available to the motor (12) when the displacement thereof is decreased.

2.      A control system (11) according to claim 1, characterized in that a plurality of separate flow line means (22, 23) are provided for directing working fluid to the motor (12), the flow adjusting means (76) blocking the flow of fluid to the motor (12) through at least one of the flow lines (23) when the displacement of the motor (12) is increased and enabling the flow of fluid to the motor (12) through that flow line (23) when the displacement of the motor (12) is decreased.

3.      A control system (11) according to claim 2, characterised in that each of the separate flow lines (22, 23) receives the output flow from a separate one of a plurality of pumps (18, 19).

4.     A control system (11) according to any of claims 1 to 3, including a manually operable motor speed control valve (54) for selectively varying the rate of flow of working fluid to the motor (12) and at least  one manually actuatable control (58), actuation of which initiates the predetermined condition, the displacement control means (66) being arranged to sense actuation of the control (58) and responding thereto by causing the displacement adjustment means (17) to increase the displacement of the motor (12) and by causing the flow adjusting means (76) to reduce the flow of working fluid available to the motor (12).

5.     A control system according to any of claims 1 to 4, including manually actuatable displacement control means (74) for selectively causing the motor displacement adjustment means (17) to change the displacement of the motor (12) in the absence of the predetermined condition and for concurrently causing the flow adjustment means (76) to change the flow of working fluid available to the motor (12).

6.     A control system (11) according to any of claims 1 to 5, for controlling at least two displacement adjustable fluid motors (12, 13), wherein the predetermined condition is a slowing of the speed of one of the motors (12, 13) relative to the other, the control system further including condition sensing means (67) for detecting asynchronous operation of the motors (12, 13) and, in response thereto for operating the displacement adjustment means (17) and the flow adjusting means (76) to reduce the speeds of both of the motors (12, 13) during asynchronous operation thereof.

7.     A control system (11) according to claim 6,

- 21 -

further including manually actuatable valves (57, 58) for selectively initiating asynchronous operation of the motors (12, 13) characterized in that the condition sensing means (67) senses actuation of either of the manually actuatable valves (57, 58) and initiates operation of the displacement adjustment means (17) and the flow adjustment means (76) in response thereto.

8.      A control system (11) according to claim 6, further including a crossover valve (64) for exchanging working fluid between the motors (12, 13), characterized in that the condition sensing means (67) closes the crossover valve (64) to block exchange of working fluid between the motors (12, 13) upon detection of asynchronous operation of the motors.

9.      A control system (11) according to claim 1, for controlling a plurality of fluid motors (11, 12) which are provided with pressurized working fluid by a larger plurality of pumps (18 to 21,) each of the motors (12, 13) being shiftable between a low motor displacement setting and a high motor displacement setting, characterised in that first (28) and second (29) pilot operated control valves are connected between a first (18) and a second (19) of the pumps and a first (12) one of the motors, and third (30) and fourth (31) pilot operated control valves are connected between a third (20) and a fourth (12) of the pumps and a second (13) one of the motors; synchronous drive initiating valve means being provided (54) for transmitting a selectable pilot pressure to each of the pilot operated control valves (28 to 31) to cause working fluid from each of the first, second, third and fourth pumps (18 to 21) to be supplied to the motors (12, 13) for synchronous operation thereof; valve means (57, 58) for initiating asynchronous motor operation being provided for selectively varying the pilot pressure transmitted to either of the first (28) and the third (30) control valves relative to the pilot pressure transmitted to the other thereof to cause the motors to operate at different speeds; condition sensing valve means (67) being provided for detecting a variation of the pilot pressure being transmitted to one of the first (28) and third (30) control valves relative to the pilot pressure being transmitted to the other thereof and for shifting the motors (12, 13) from low displacement setting to high displacement setting while one of the pilot pressures differs from the other thereof, and pilot pressure release valve means (63) being provided for blocking transmission of the selectable pilot pressure to the second (29) and fourth (31) control valves concurrently with shifting of the motors (12, 13) from low motor displacement setting to high motor displacement setting to block the flow of working fluid to the motors (12, 13) from the second (19) and fourth (21) pumps while the motors (12, 13) are in the high motor displacement settings.

10.      A control system (11) according to claim 9, further including a crossover valve (64) for enabling an exchange of working fluid between the motors (12, 13), characterized in that the condition sensing valve means (67) closes the crossover valve (64) to block the exchange of working fluid during periods when one of the pilot pressures differs from the other.

11.      A control system (11) according to claim 9 or claim 10, further including manually actuatable valve means (74) for selectively shifting the motors (12, 13) from low displacement setting to high displacement setting and for concurrently causing the pilot pressure release valve means (63) to block the selectable pilot pressure from the second (29) and fourth (31) control valves.